Europäisches Patentamt

European Patent Office

Office européen des brevets

(11) Publication number: **0 401 444**
**A2**

# (12) EUROPEAN PATENT APPLICATION

(21) Application number: **89313543.4**

(22) Date of filing: **22.12.89**

(51) Int. Cl.5: **B60C 9/22, B60C 9/20**

(30) Priority: **06.06.89 JP 143454/89**

(43) Date of publication of application:
**12.12.90 Bulletin 90/50**

(84) Designated Contracting States:
**DE FR GB LU**

(71) Applicant: **Bridgestone Corporation**
**10-1, Kyobashi 1-Chome Chuo-Ku**
**Tokyo 104(JP)**

(72) Inventor: **Mitsutake, Toshiyuki**
**18 30 909, Irumagawa 1-chome**
**Sayama-shi Saitama-ken(JP)**

(74) Representative: **Whalley, Kevin et al**
**MARKS & CLERK 57/60 Lincoln's Inn Fields**
**London WC2A 3LS(GB)**

(54) **Pneumatic radial tire.**

(57) To reduce the shearing distortion generated between two belt layers (9a, 9b) at both the axial ends of a tire belt (8), that is to prevent so-called belt end separation of the pneumatic radial tire after the tire has been inflated and deformed under load, two reinforcement layers (20, 21), each including thermoshrinkable fiber cords (24) extending in a tire circumferential direction, are wrapped around at least both axial ends of the belt layers under tension, so that an inclination angle (A) of the belt layer cords with respect to the tire meridian direction at both the axial ends of the belt layer is smaller than that (B) near the tire equatorial plane (16) after vulcanization molding process.

FIG.1

## PNEUMATIC RADIAL TIRE

The present invention relates to a pneumatic radial tire, and more specifically to a radial tire resistant against so-called belt end separation trouble.

Conventionally, there is known a prior-art pneumatic radial tire including a toroidal carcass in which cords extending in the tire meridian cross-section direction are buried; a belt formed by putting several belt layers one upon the other in each of which cords formed by bundling several steel element wires are buried so as to be arranged on the radially outward side of the carcass at an inclination angle with respect to the tire meridian cross-section direction in such a way that cords of different belt layers intersect each other; and a tread formed on the radially outward side of the belt. Further, recently, there exists a tendency such that the number of filaments used for the belt layer stranded cord is decreased by increasing the diameter of the steel filament.

In the prior-art pneumatic tire as described above, however, since at least two belt layers are arranged in such a way that the cords of different belt layers intersect each other, when the tire is inflated with air or deformed under load, a large shearing distortion easily occurs between these intersecting two belt layers, in particular at both the belt ends; as a result, there exists a problem in that the two belt layers are separated from each other at both the belt ends after many hour travel of the pneumatic radial tire.

To overcome the above-mentioned problem it is possible to consider that the separation between the belt layers can be prevented by reducing the inclination angle of the cords buried in the belt layer with respect to the tire meridian cross-section direction to reduce the shearing distortion at both the belt ends. In this case, however, another problem arises in that the belt rigidity at the tread center is reduced and therefore the vehicle cornering performance is deteriorated.

With these problems in mind, therefore, the object of the present invention is to provide a pneumatic radial tire which can effectively prevent the belt end separation trouble without deteriorating the vehicle cornering performance.

To achieve the above-mentioned object, a pneumatic radial tire according to the present invention comprises: (a) a toroidal carcass in which cords extending in a tire meridian direction are buried; (b) a belt formed by putting plural belt layers one upon the other on the crown portion of said carcass, in each of which cords formed by bundling plural metallic filaments are buried at an inclination angle with respect to the tire meridian direction in such a way that cords of different belt layers intersect each other; (c) a tread disposed on the radially outward side of the belt; and (d) at least two reinforcement layers, in each of which thermoshrinkable fiber cords extending in a tire circumferential direction roughly perpendicular to the tire meridian direction are buried on at least both axially end portions of said belt by applying a tension to said reinforcement layers along the tire circumferential direction, so that an inclination angle (A) of the belt layer cords with respect to the tire meridian direction on both the axially end portions of the belt layers is determined smaller than that B near a tire equatorial plane after vulcanization molding process to reduce shearing distortion between the belt layers when the inflated tire is deformed under load.

The features and advantages of the pneumatic radial tire according to the present invention will be more clearly appreciated from the following description of the preferred embodiments of the invention taken in conjunction with the accompanying drawing in which like reference numerals designate the same elements throughout the figures thereof and in which:

Fig. 1 is a cross-sectional view showing an embodiment of the radial tire according to the present invention, taken along the tire meridian direction; and

Fig. 2 is a fragmentary development plan view showing the embodiment tire shown in Fig. 1.

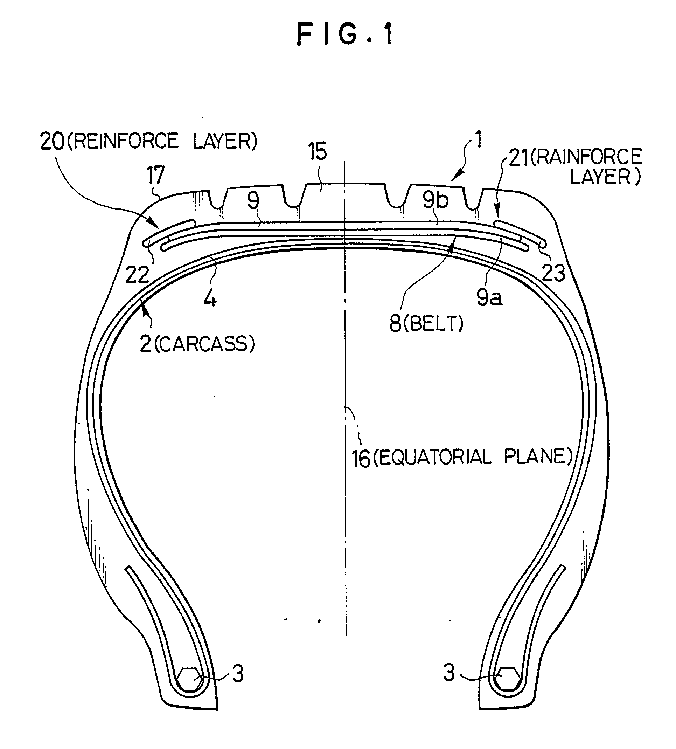

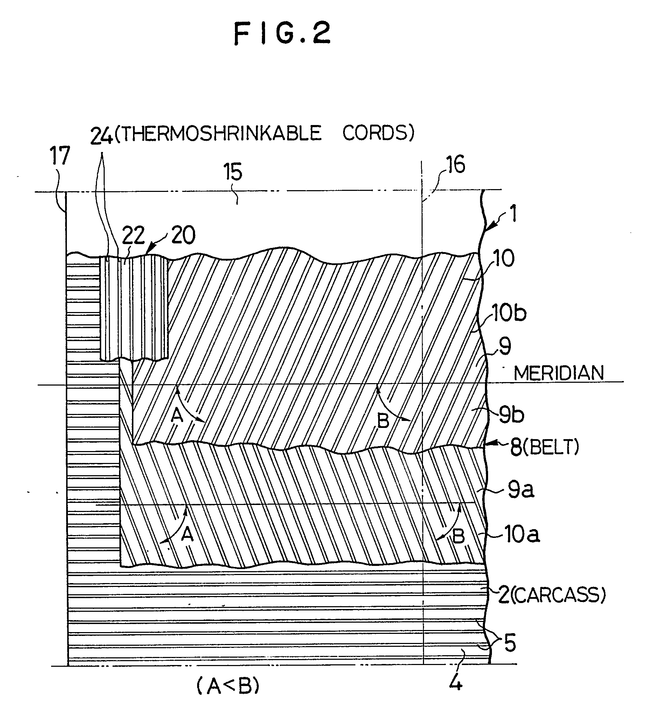

An embodiment of the tire according to the present invention will be described hereinbelow with reference to the attached drawings. In Figs. 1 and 2, a pneumatic radial tire 1 according to the present invention suitable for use in a passenger car, for instance comprises a toroidal carcass 2. This carcass 2 is returned axially outwardly around two bead rings 3 on both the tire radially inward end sides, and composed of at least one (three at the maximum, but one in this embodiment shown) carcass ply 4. In the carcass ply 4, a number of cords 5 extending in the tire meridian cross-section direction (i.e. tire radial direction) are buried. These cords are formed of nylon, polyester, rayon, aromatic polyamide fiber, etc.

On the crown portion of the carcass 2, a belt 8 is arranged by putting several belt layers 9a, 9b, ... one upon the other (two in this embodiment). In each belt layer 9, a number of cords 10 are buried at an inclination angle of 60 to 75 degrees with respect to the tire meridian cross-section direction in such a way that the cords 10a and 10b of at least two different belt layers 9a and 9b intersect each other, respectively; that is, each of the cords 10a of the belt layer 9a is inclined at one direction and each of the cords 10b of the other belt layer 9b is inclined at the other opposite direction in symetrical relationship with respect to the tire meridian cross-section direction.

The belt cords 10 are formed by twisting a plurality (three in usual) of metallic (e.g. steel) filaments with a 0.25mm or more diameter (0.4mm in the maximum and 0.28 to 0.35mm in usual). Under these conditions, since the cut-off ends of the relatively large diameter filaments are exposed at both the axially end portions of the belt layer 9, there exists a problem in that belt end separation trouble occurs at both the belt ends, as already explained.

On the other hand, a tread 15 is formed on the radially outward side of the belt 8. The outer surface contour of the tread 15 to be brought into contact with the ground is formed into a radially outwardly convex shape with a predetermined well-known tire patterns on the tire outer surface thereof formed at the vulcanization molding process. The thickness of the tread 15 is roughly equal from the tread center on the tire equational plane 16 to the tread ends 17 (the axially outward ends of the tread 15 in contact with the ground) when the tire 1 is mounted on a regular rim and inflated at a normal inflation pressure, and further a normal load is applied thereto. However, there exists a case where the thickness of the tread 15 on the tread ends 17 is reduced according to the kinds of tire.

Reinforcement layers 20 and 21 of the present invention are attached to both the axially end portions of the belt 8, in more detail on both the axially outermost end regions determined when the maximum width of the belt layers 9a is divided into four areas. That is, these reinforcement layers 20 and 21 must be overlapped with the belt 8 partially on both the axial end portions of the tire 1, without being overlapped throughout the belt 8. Further, as shown in Figs. 1 and 2, it is also preferable that these reinforcement layers 20 and 21 extend beyond the axially outward ends of the belt 8 or extend so as to cover all over the belt 8 from one end to the other end thereof. Each of the reinforcement layers 20 and 21 is formed by putting one to three (one in Fig. 1) reinforcement plies one upon the other. In each reinforcement ply 22 or 23, several cords 24 made of thermoshrinkable fiber such as nylon, polyester, rayon, etc. are buried extending in a direction (roughly along the tire circumferential direction) perpendicular to the tire meridian cross-section direction.

To manufacture the above-mentioned tire 1, first the carcass 2 is formed by wrapping carcass plies 4 around a cylindrical tire forming drum, and then the carcass 2 is deformed into a toroidal shape. On the other hand, the belt 8 is formed by wrapping two belt layers 9a and 9b around another cylindrical drum in such a way that cords 10a and 10b of different belt layers intersect each other, and then two reinforcement layers 20 and 21 are formed on at least axially outward end portions of the belt 8 by applying a tension to the reinforcement layers 20 and 21 along the tire circumferential direction. In this embodiment, each reinforcement layer 20 or 21 is formed by arranging 1 to 15 (5 to 12 in usual) cords 24 in parallel to each other along the tire circumferential direction and by coating these cords with rubber into a ribbon state. The rubber coated cord ribbon thus formed is wrapped around the belt layer 9b helically along the tire circumferential direction.

Where the reinforcement layer 20 or 21 is formed by a single reinforcement ply 22 or 23 as in this embodiment, the ribbon is wrapped around the tire from the axially inner side to the axially outer side or vice versa. Further, where the reinforcement layer 20 or 21 is formed by two reinforcement plies, the ribbon is wrapped around the tire first from the axially inner side to the axially outer side to form a first reinforcement ply and then continuously from the axially outer side to the axially inner side to form a second reinforcement ply. During ribbon wrapping process, it is preferable to apply such a tension to the ribbon that the cord is lengthened by 0.5 to 3% of the original cord length (especially nylon cord) in order to securely reduce the inclination angle of the cords as described later in more detail.

Thereafter, the tread 15 is wrapped around the radially outer side of the belt 8 and the reinforcement layers 20 and 21 to form a belt and tread band portion. This belt and tread band portion are fixed under pressure to the outer side of the toroidal carcass 2 to form a green tire. The green tire is then put into a mold for vulcanization. During this vulcanizing process, in the prior-art tire, since no reinforcement layers 20 and 21 are provided, the belt is entirely and uniformly expanded in the tire radial direction, so that the inclination angle of the cords buried in the belt layers uniformly increases several degrees all over the belt layers with respect to the tire meridian cross-section direction.

In contrast with this, in the tire formed with the reinforcement layers 20 and 21 according to the present invention, since the metallic cords 10a and 10b of the belt layers 9a and 9b are free on both the axially end portions, the thermoshrinkable cords 24 are sufficiently shrank due to vulcanizing heat, so that the expansion of the tire is effectively restricted on both the axially end portions of the belt 8 by these shrank cords of the reinforcement layers 20 or 21. In other words, an increase in radial dimension of the tire is suppressed only on both the axially end portions of the belt 8. On the other hand, the axially central portion of the belt 8 is easily expanded within the vulcanizing mold to such an extent as in the conventional tire. The above-mentioned effect is the same as when the reinforcement layers 20 and 21 are joined with each other at the tire tread center by tension control of the thermoshrinkable cord (i.e. where the reinforcement layer covers all over the belt 8). As a result, after the tire 1 has been vulcanized, the inclination angle A of the cords 10a and 10b buried on both the axially end portions of the belt layers 9a and 9b with respect, to the tire meridian cross-section direction becomes smaller than that B of the cords 10a and 10b buried near the tire equational plane 16 of the belt layers 9a and 9b. Therefore, it is possible to reduce the shearing distortion generated between the two belt layers 9a and 9b on both the axially end portions of the belt 8 when the tire is inflated with air or deformed under load for many hours, thus preventing the belt end separation problem.

In the above description, the difference in inclination angle between A (on both ends) and B (at the center) is preferably 1 to 5 degrees. This is because when the angle difference is less than one degree, the above-mentioned effect upon belt layer separation prevention is small; on the other hand, when the angle difference is more than five degrees, there arises another problem in that the tire is worn away non-uniformly. That is, the most preferable inclination angle difference lies between two and four degrees. Further, since the inclination angle of the cords 10a and 10b at the central portion of the belt 8 is almost the same as in the conventional tire, tire performance is not deteriorated with respect to both the belt rigidity and the vehicle travelling steerability. In summary, the tire according to the present invention comprises the two reinforcement layers 20 and 21 in each of which thermoshrinkable fiber cords 24 are buried in such a way that an inclination angle A of the cords 10a and 10b on both axially end portions of the belt layers 9a and 9b with respect to the tire meridian cross-section direction is smaller about 1 to 5 degrees than that B at the central portion of the belt layers 9a and 9b, after vulcanization process.

Test results will be described hereinbelow. For test, first comparison tires 1, second comparison tires 2, and invention tires were prepared. In the first comparison tires 1, the belt was formed by two belt layers in each of which cords made by twisting five filaments having each a 0.23 mm diameter. These steel cords were buried, and the reinforcement layers were formed by helically wrapping a rubber coated ribbon, in which ten 6.6-nylon (1260 d/2) cords were arranged in parallel to each other, on the belt layer 9b as shown in Fig. 2 without applying a tension to the ribbon. In the second comparison tires 2, the belt was formed by two belt players in each of which cords made by twisting filaments having each a 0.3 mm diameter. These steel cords were buried under quite the same conditions as in the first comparison tires 1 except the above. In the invention tires, the belt was formed by the belt layer cords made by twisting three filaments having each 0.3 mm diameter. These steel cords as in the comparison tires 2, and the reinforcement layers were formed by helically wrapping a rubber coated ribbon, formed in the same way as in the comparison tires 1, on the belt layer 9b under such a tension that 2% of the original ribbon length was lengthened. In both the comparison tires 1 and 2 and the invention tires, the inclination angle of the belt cords of the green tires was all about 66 degrees at almost all the locations. After vulcanization process, however, in both the comparison tires 1 and 2, the inclination angles A (on both ends) and B (at the center) of the belt cords were about 68 degrees. On the other hand, in the invention tires, the inclination angle A thereof was 66 degrees but the inclination angle B thereof was 69 degrees (i.e. A<B) after vulcanization. Further, the size of the above-mentioned test tires were 205/70 HR 14.

In addition, the travelling test was performed about these three kinds of test tires. The test tires were mounted on 5-1/2 J rims and inflated at an inner pressure of 2.4 kg/cm$^2$ and then rotated on drums by applying a 200% load prescribed in TRA standard, at a speed of 70 km/h, and at a distance of 15,000 km. Thereafter, these test tires were broken up to measure and average the lengths of the belt layer separations on both the axially end portions thereof. As a test result, an average index of the invention tires was reduced down to 70 as compared with 100 of the comparison tires 1 and 125 of the comparison tires 2, where the index 100 corresponds to 8 mm. The above result indicates that the durability of the invention tires against the belt layer separation on both the ends thereof can be improved in spite of the fact that the diameter of the belt cords is increased from 0.23 to 0.3 mm.

In addition, cornering power CP applied to the test tires was measured by rotating the test tires on the same drum by applying the same load at a speed of 30 km. As a test result, an average index of the invention tires was increased up to 105 as compared with 100 of the comparison tires 1 and 101 of the comparison tires 2, where the index 100 corresponds to 91 kgf/deg. The above test result indicates that vehicle travelling steerability of the invention tires can be improved a little.

As described above, in the pneumatic radial tire according to the present invention, since the belt is reinforced by the two reinforcement layers, in particular on both the axially end portions of the belt layers, it is possible to effectively prevent belt end separation trouble without deteriorating the vehicle travelling steerability.

## Claims

1. A pneumatic radial tire (1) comprising:

(a) a toroidal carcass (2) including cords (5) extending in a tire meridian direction;

(b) a belt (8) formed by a plurality of belt layers (9a, 9b) placed one upon the other at the crown portion of said carcass, each including cords (10a, 10b) formed by bundling a plurality of metallic filaments and arranged at an inclination angle with respect to the tire meridian direction such that cords of different belt layers intersect each other;

(c) a tread (15) disposed on the radially outward side of the belt; and

(d) at least two reinforcement layers (20, 21) in each of which thermoshrinkable fiber cords (24) extending in a tire circumferential direction generally perpendicular to the tire meridian direction are disposed at at least both axially end portions of said belt by applying a tension to said reinforcement layers along the tire circumferential direction, so that an inclination angle (A) of the belt layer cords with respect to the tire meridian direction at both the axially end portions of the belt layers is smaller than an inclination angle (B) near the tire equatorial plane (16) after a vulcanization molding process to reduce shearing distortion between the belt layers when the inflated tire is deformed under load.

2. A pneumatic radial tire as claimed in claim 1, characterized in that said at least two reinforcement layers are formed on said belt at least in both axially outermost end areas, determined when a maximum width of the belt layers is divided into four areas, so as to cover both the axial end portions of said belt.

3. A pneumatic radial tire as claimed in claim 2, characterized in that said two reinforcement layers are formed so as to extend beyond the axially outward end portions of said belt in the axially outward end areas.

4. A pneumatic radial tire as claimed in claim 1, characterized in that said two reinforcement layers are connected to each other so as to cover throughout the belt from one axially outward end portion to the other axially outward end portion thereof.

5. A pneumatic radial tire as claimed in any of claims 1 to 4, characterized in that said thermoshrinkable cords are made of a material selected from nylon, polyester and rayon.

6. A pneumatic radial tire as claimed in any of claims 1 to 5, characterized in that the tension applied to said reinforcement layer is such that 0.5 to 3% of an original length of the thermoshrinkable cord is lengthened.

7. A pneumatic radial tire as claimed in any of claims 1 to 6, characterized in that the difference in inclination angle of said belt layer cords with respect to the tire meridian direction between both the axially end portions of the belt layers and near the tire equatorial plane thereof is from 2 to 4 degrees.

8. A method of manufacturing a pneumatic radial tire (1), comprising:

(a) forming a carcass (2) by wrapping carcass plies (4) around a cylindrical drum;

(b) forming the carcass into a toroidal shape;

(c) forming a belt (8) by wrapping at least two belt layers (9a, 9b) around another cylindrical drum such that cords (10a, 10b) of each of the different belt layers intersect each other in symmetry with respect to a tire meridian direction;

(d) forming two reinforcement layers (20, 21) by helically wrapping a rubber coated thermoshrinkable ribbon around at least axially outward end portions of the belt along a tire circumferential direction by applying a tension to the ribbon;

(e) forming a tread (15) on and around the belt and the reinforcement layers to form a belt and tread band portion;

(f) fixing the formed belt and tread band portion to the outside of the formed toroidal carcass under pressure to manufacture a green tire; and

(g) vulcanizing the green tire within a mold in such a way that an inclination angle (A) of the thermoshrinkable cords (24) of the reinforcement layers at both the axially end portions of the belt with respect to the tire meridian direction becomes smaller than an inclination angle (B) of the thermoshrinkable cords thereof near the tire equatorial plane (16), whereby shearing distortion generated between the two belt layers can be reduced when the tire is inflated or deformed under load.

9. A method as claimed in claim 8, characterized in that the ribbon of said reinforcement layers is formed by the following steps of:

(a) arranging a plurality of thermoshrinkable cords in parallel to each other; and

(b) coating the arranged cords with rubber into a ribbon state.

10. A method as claimed in claim 8 or 9 characterized in that when said reinforcement layer is formed by a single ply, said rubber coated thermoshrinkable ribbon is wrapped around said belt layers beginning from an axially inner side to an axially outer side.

11. A method as claimed in claim 8 or 9, characterized in that when said reinforcement layer is formed by two plies, said rubber coated thermoshrinkable ribbon is wrapped around said belt layers first beginning from an axially inner side to an axially outer side to form a first ply and then from the axially outer side to the axially inner side to form a second ply.

# FIG. 1

20(REINFORCE LAYER)

17

15

1

21(RAINFORCE LAYER)

9

9b

22

23

4

9a

2(CARCASS)

8(BELT)

16(EQUATORIAL PLANE)

3

3

# FIG.2

24(THERMOSHRINKABLE CORDS)

17

15

16

1

22  20

10

10b

9

MERIDIAN

9b

A    B

8(BELT)

9a

A    B    10a

2(CARCASS)

5

4

(A<B)